# EUROPÄISCHE PATENTSCHRIFT

(11) **EP 3 197 617 B1**
(45) Veröffentlichungstag und Bekanntmachung des Hinweises auf die Patenterteilung: **31.10.2018**
(21) Anmeldenummer: 15766834.4
(22) Anmeldetag: 22.09.2015
(51) Int. Cl.: B21J 15/14, B64F 5/00

(54) **BEARBEITUNGSANLAGE FÜR FLUGZEUGSTRUKTURBAUTEILE**
DEVICE FOR THE MANUFACTURE OF AIR PLANE STRUCTURES
DIPSPOSITIF DE FABRICATION DE STRUCTURES D'AVIONS

(30) Priorität: 22.09.2014 DE 102014113663
(43) Veröffentlichungstag der Anmeldung: 02.08.2017
(73) Patentinhaber: Broetje-Automation GmbH, 26180 Rastede (DE)
(72) Erfinder: VARRELMANN, Nils, 26316 Varel (DE)
(74) Vertreter: Gottschald, Jan
(86) Internationale Anmeldenummer: PCT/EP2015/071688
(87) Internationale Veröffentlichungsnummer: WO 2016/046185

(56) Entgegenhaltungen:
- CN-A- 101 817 146
- DE-U1-202013 003 544
- US-A- 5 231 747
- US-A- 5 701 651
- US-A1- 2002 113 354

## Beschreibung

Die Erfindung betrifft eine Bearbeitungsanlage für Flugzeugstrukturbauteile mit den Merkmalen des Oberbegriffs von Anspruch 1 sowie ein Verfahren für den Betrieb einer solchen Bearbeitungsanlage mit den Merkmalen des Oberbegriffs von Anspruch 17.

Die Herstellung von Flugkörpern und insbesondere Flugzeugen umfasst die Bearbeitung großer Flugzeugstrukturbauteile wie etwa der Flügel und des Rumpfes oder Teilen davon in speziellen Bearbeitungsanlagen.

Die bekannte Bearbeitungsanlage (DE 20 2013 003 544 U1), von der die Erfindung ausgeht, weist eine Bearbeitungsstation mit einem Aufspannrahmen zur Aufnahme des jeweils zu bearbeitenden Flugzeugstrukturbauteils auf. Die Bearbeitungsstation ist ferner mit einer als Nieteinheit ausgestalteten Bearbeitungseinheit ausgestattet.

Für die Bearbeitung der Flugzeugstrukturbauteile ist eine Ausrichtung zwischen dem Aufspannrahmen und der Bearbeitungseinheit erforderlich. Im Hinblick auf die oftmals freiformähnlichen Oberflächengeometrien der Flugzeugstrukturbauteile geht die Ausrichtung auf eine mindestens zweiachsige Schwenkverstellung zurück. Bei der bekannten Bearbeitungsanlage ist der Aufspannrahmen über endseitige Schwenklager um eine Rahmen-Längsachse schwenkbar. Ferner sind die Schwenklager an Positioniertürmen, die in einer vertikalen Turmebene angeordnet sind, höhenverstellbar angelenkt, wodurch sich die Schwenkbarkeit des Aufspannrahmens um weitgehend beliebige, imaginäre Rahmen-Querachsen realisieren lassen.

Vorteilhaft bei der bekannten Bearbeitungsanlage ist die Tatsache, dass angesichts der obigen Schwenkbarkeit des Aufspannrahmens eine Schwenkbarkeit der Nieteinheit, die regelmäßig ein Oberwerkzeug und ein Unterwerkzeug aufweist, nicht erforderlich ist. Dies vereinfacht den mechanischen Aufbau der Bearbeitungseinheit.

Eine Herausforderung bei der bekannten Bearbeitungsanlage stellt allerdings das Beladen und Entladen des Aufspannrahmens mit bzw. von einem Flugzeugstrukturbauteil dar. Der Grund hierfür ist die Notwendigkeit der Positioniertürme, um die Schwenkbarkeit um eine imaginäre Rahmen-Querachse zu erlauben. Das Beladen und Entladen ist bei der bekannten Bearbeitungsanlage ausschließlich quer zu der Stations-Längsachse möglich, ohne dass es zu einer Kollision mit den Positioniertürmen kommt. Damit ist eine Linienfertigung, bei der das Flugzeugstrukturbauteil taktweise entlang einer Stations-Längsachse von Bearbeitungsstation zu Bearbeitungsstation transportiert wird, nur mit großem Handhabungsaufwand möglich.

Der Erfindung liegt das Problem zugrunde, die bekannte Bearbeitungsanlage derart auszugestalten und weiterzubilden, dass das Beladen und/oder das Entladen des Aufspannrahmens mit bzw. von einem Flugzeugstrukturbauteil vereinfacht wird.

Das obige Problem wird bei einer Bearbeitungsanlage gemäß dem Oberbegriff von Anspruch 1 durch die Merkmale des kennzeichnenden Teils von Anspruch 1 gelöst.

Wesentlich ist die grundsätzliche Überlegung, den Aufspannrahmen derart an den Positioniertürmen anzulenken, dass das Beladen bzw. Entladen des Aufspannrahmens von den Positioniertürmen weniger behindert wird. Im Einzelnen wird vorgeschlagen, dass ein Querversatz des Aufspannrahmens quer zu der Turmebene vorgesehen ist, der erlaubt, dass ein Beladen und/oder ein Entladen des Aufspannrahmens mit bzw. von einem Flugzeugstrukturbauteil entlang der Turmebene erfolgt und seitlich an zumindest einem Positionierturm vorbeiführt. Damit lässt sich die Bearbeitungsstation so in eine Linienfertigung integrieren, dass die Rahmen-Längsachse des Aufspannrahmens auf die Materialflussrichtung der Linienfertigung ausgerichtet ist. Das Beladen und/oder Entladen des Aufspannrahmens kann dann ohne zwischengeschaltete Handhabungsaktionen in der Materialflussrichtung der Linienfertigung, die vorzugsweise der Stations-Längsachse entspricht, vorgenommen werden.

Die vorschlagsgemäße Lösung kann mit ganz unterschiedlichen Bearbeitungseinheiten Anwendung finden. Bei der besonders bevorzugten Ausgestaltung gemäß Anspruch 2 ist die Bearbeitungseinheit mit einem Oberwerkzeug und einem Unterwerkzeug ausgestattet, die in einer bevorzugten Variante an einem portalförmigen Gestell angeordnet sind. Hier ragt das Flugzeugstrukturbauteil je nach Stellung des portalförmigen Gestells entlang der Stations-Längsachse durch das portalförmige Gestell hindurch. Für das Beladen bzw. Entladen ist die Bearbeitungseinheit in eine entsprechende Parkposition zu verstellen, um Kollisionen mit dem Flugzeugstrukturbauteil zu vermeiden. Im Übrigen handelt es sich bei der Ausführungsform mit portalförmigem Gestell um eine vergleichsweise kostengünstige Variante.

Noch kosteneffektiver ist die weiter bevorzugte Ausführungsform gemäß Anspruch 3, bei der Oberwerkzeug und Unterwerkzeug an einem Gestell angeordnet sind, das insbesondere C-förmig ausgestaltet ist. Ein solches C-förmiges Gestell lässt sich bei geeigneter Auslegung jederzeit quer zu der Stations-Längsachse komplett aus dem für das Beladen und/oder Entladen erforderlichen Bewegungsbereich des Flugzeugstrukturbauteils herausfahren. Diese Verstellbarkeit des Gestells quer zu der Stations-Längsachse ist im Übrigen vorteilhaft, da eine Verstellbarkeit von Oberwerkzeug und Unterwerkzeug relativ zu dem Gestell nicht notwendig ist, was den konstruktiven und steuerungstechnischen Aufwand verglichen mit einem oben angesprochenen Portalsystem weiter reduziert.

Eine besonders einfache Umsetzung des vorschlagsgemäßen Querversatzes ist Gegenstand von Anspruch 9. Bei den Tragrahmen kann es sich um einfache, quer von den Positioniertürmen abragende Stahlprofile handeln.

Die weiter bevorzugten Ausgestaltungen gemäß den Ansprüchen 11 und 12 betreffen vorteilhafte Varianten für die Realisierung von Übergabestationen, die insbesondere als Rüstplätze ausgestaltet sein können. Die Ausstattung der Übergabestationen mit Rollenanordnungen gemäß Anspruch 12 ermöglicht einen besonders einfachen Transport des jeweiligen Flugzeugstrukturbauteils.

Eine besonders kompakte und gleichzeitig mechanisch besonders robuste Ausgestaltung ergibt sich gemäß Anspruch 13, indem die beiden Positioniertürme zwei Bearbeitungsstationen zugeordnet sind, die gemäß Anspruch 14 bezogen auf die Turmebene auf zwei gegenüberliegenden Seiten angeordnet sind. Bei der symmetrischen Ausgestaltung gemäß Anspruch 15 ergibt sich auf mechanisch besonders robuste Weise die Möglichkeit des Einsatzes der Bearbeitungsanlage innerhalb zweier, parallel laufender Linienfertigungen.

Nach einer weiteren Lehre gemäß Anspruch 17 wird ein Verfahren für den Betrieb einer vorschlagsgemäßen Bearbeitungsanlage beansprucht.

Wesentlich nach der weiteren Lehre ist, dass ein Beladen und/oder ein Entladen durch einen Transport, insbesondere ein Verschieben, des Flugzeugstrukturbauteils zwischen mindestens einer Übergabestation und mindestens einer Bearbeitungsstation erfolgt. Wesentlich ist die grundsätzliche Überlegung, dass das Beladen und/oder das Entladen entlang der Turmebene über mindestens eine Übergabestation erfolgt. Dabei kann es grundsätzlich auch vorgesehen sein, dass die der vorschlagsgemäßen Bearbeitungsstation vorgelagerte Übergabestation gleichzeitig eine einer weiteren Bearbeitungsstation als nachgelagerte Übergabestation dient. Insoweit ist das vorschlagsgemäße Verfahren prädestiniert für den Einsatz in einer Linienfertigung mit mehreren, in Materialflussrichtung der Linienfertigung angeordneten Bearbeitungsstationen.

Im Folgenden wird die Erfindung anhand einer lediglich Ausführungsbeispiele darstellenden Zeichnung näher erläutert. In der Zeichnung zeigt
- Fig. 1: eine vorschlagsgemäße Bearbeitungsanlage in einer perspektivischen Ansicht,
- Fig. 2: die Bearbeitungsanlage gemäß Fig. 1 a) während des Beladens, b) während der Bearbeitung, c) während des Entladens,
- Fig. 3: die Bearbeitungsanlage gemäß Fig. 1 in einer schematischen Darstellung a) in einer ersten Materialflussvariante, b) in einer zweiten Materialflussvariante und c) in einer dritten Materialflussvariante und
- Fig. 4: ein weiteres Ausführungsbeispiel für eine vorschlagsgemäße Bearbeitungsanlage in einer perspektivischen Darstellung entsprechend der Darstellung gemäß Fig. 1.

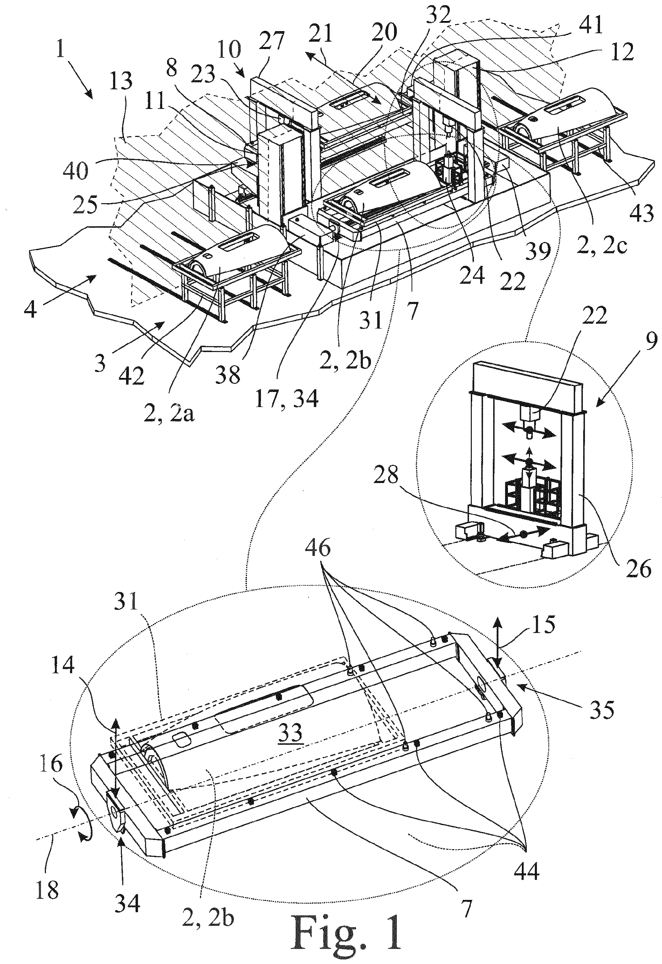

Die dargestellte Bearbeitungsanlage 1 dient der Bearbeitung von Flugzeugstrukturbauteilen 2, bei denen es sich wie weiter oben angesprochen um Rümpfe, Flügel oder andere große Flugzeugstrukturbauteile handeln kann. Die Bearbeitungsanlage 1 weist mindestens eine Bearbeitungsstation 3, 4, hier und vorzugsweise zwei Bearbeitungsstationen 3, 4, auf. Im Folgenden wird zur Erläuterungen der Bearbeitungsstationen 3, 4 im Sinne einer übersichtlichen Darstellung in erster Linie Bezug auf die in Fig. 1 rechts dargestellte Bearbeitungsstation 3 genommen. Diese Erläuterungen gelten für die weitere Bearbeitungsstation 4 entsprechend.

Die Bearbeitungsstation 3, 4 weist einen sich entlang einer Stations-Längsachse 5, 6 erstreckenden Aufspannrahmen 7, 8 zur Aufnahme des jeweils zu bearbeitenden Flugzeugstrukturbauteils 2 auf. Die Erstreckung des Aufspannrahmens 7, 8 entlang der Stations-Längsachse 5, 6 ist weit zu verstehen, sie bedeutet, dass der Aufspannrahmen 7, 8 zumindest in einer Grundstellung parallel zu der Stations-Längsachse 5, 6 verläuft.

Die Bearbeitungsstation 3, 4 ist ferner mit einer Bearbeitungseinheit 9, 10 für die Bearbeitung des Flugzeugstrukturbauteils 2 ausgestattet. Bei der Bearbeitungseinheit 9, 10 handelt es sich hier und vorzugsweise um eine Nieteinheit.

Der Aufspannrahmen 7, 8 ist an zwei Positioniertürmen 11, 12, die in einer vertikalen Turmebene 13 angeordnet sind, höhenverstellbar und schwenkbar angelenkt. Die Höhenverstellbarkeit ist in Fig. 1 mit den Bezugszeichen 14, 15 angedeutet, während die Schwenkbarkeit mit dem Bezugszeichen 16 angedeutet ist. Aus Fig. 1 wird deutlich, dass die Höhenverstellbarkeit 14, 15 für die beiden Positioniertürme 11, 12 getrennt möglich ist, so dass ein Schwenken des Aufspannrahmens 7, 8 um eine imaginäre, quer zu der Stations-Längsachse 5, 6 verlaufende Schwenkachse realisierbar ist. Hierfür ist ein Längenausgleich 17 für den Aufspannrahmen 7, 8 vorgesehen, der dafür sorgt, dass bei einer unterschiedlichen Höhenverstellung an beiden Positioniertürmen 11, 12 keine mechanische Verspannung zwischen den Positioniertürmen 11, 12 und dem Aufspannrahmen 7, 8 auftritt.

Die Schwenkbarkeit des Aufspannrahmen 7, 8 definiert eine Rahmen-Längsachse 18, 19, die eine entsprechende Schwenkachse bereitstellt. Der Aufspannrahmen 7, 8 ist entlang der Rahmen-Längsachse 18, 19 länglich ausgestaltet.

Interessant ist nun, dass ein Querversatz 20, 21 des Aufspannrahmens 7, 8 zu der Turmebene 13 vorgesehen ist, der erlaubt, dass ein Beladen und/oder ein Entladen des Aufspannrahmens 7, 8 mit bzw. von einem Flugzeugstrukturbauteil 2 entlang der Turmebene 13 erfolgt und seitlich an zumindest einem Positionierturm 11, 12 vorbeiführt.

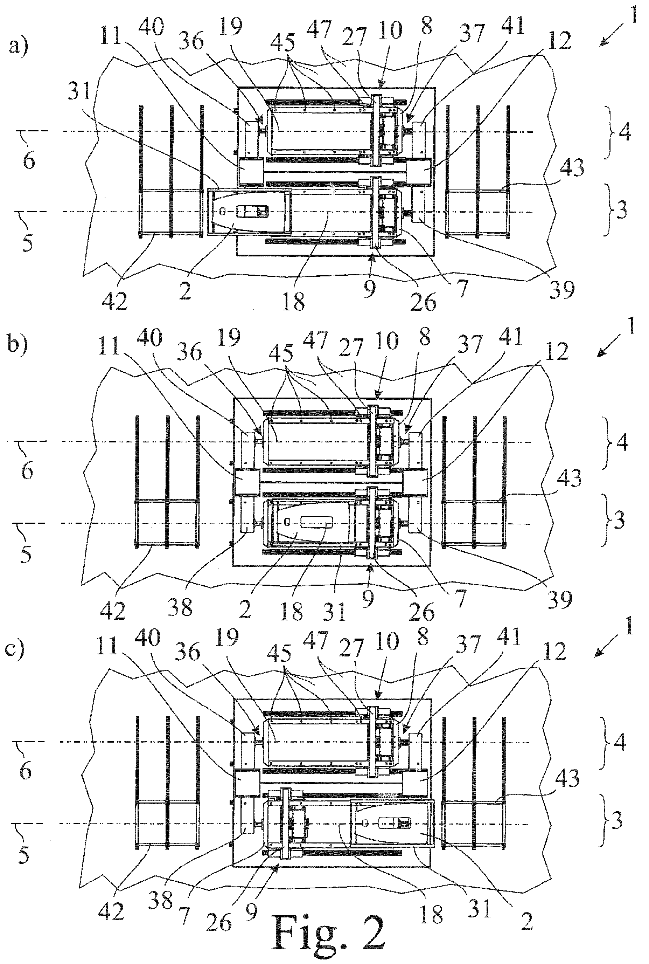

Der Übergang von Fig. 2a auf Fig. 2b zeigt das Beladen des Aufspannrahmens 7, 8 mit dem Flugzeugstrukturbauteil 2. Hier wird deutlich, dass das Flugzeugstrukturbauteil 2 an dem Positionierturm 11 vorbeigeführt wird. Der Übergang von Fig. 2b auf Fig. 2c zeigt das Entladen des Aufspannrahmens 7, 8, bei dem das Flugzeugstrukturbauteil 2 an dem anderen Positionierturm 12 vorbeigeführt wird. Interessant dabei ist die Tatsache, dass die oftmals hohen Positioniertürme 11, 12 zwar grundsätzlich ein Kollisionsrisiko für das Flugzeugstrukturbauteil 2 beim Beladen bzw. Entladen erzeugen. Durch den vorschlagsgemäßen Querversatz 20, 21 des Aufspannrahmens 7, 8 liegen die Positioniertürme 11, 12 allerdings außerhalb des Bewegungsbereichs des Flugzeugstrukturbauteils 2.

Für die Ausgestaltung der Bearbeitungseinheit 9, 10 sind verschiedene vorteilhafte Varianten denkbar. Bei dem dargestellten und insoweit bevorzugten Ausführungsbeispiel weist die Bearbeitungseinheit 9, 10 ein Oberwerkzeug 22, 23 und ein Unterwerkzeug 24, 25 auf, wobei das Oberwerkzeug 22, 23 und das Unterwerkzeug 24, 25 an einem in Fig. 1 portalförmigen Gestell 26, 27 angeordnet sind. Das Gestell 26, 27 ist parallel zu der Stations-Längsachse 5, 6 motorisch verstellbar. Die Verstellbarkeit des Gestells 26, 27 ist in Fig. 1 mit dem Bezugszeichen 28 angedeutet. Zusätzlich sind Oberwerkzeug 22, 23 und Unterwerkzeug 24, 25 quer zu der Stations-Längsachse 5, 6 jeweils verstellbar an dem Gestell 26, 27 angeordnet. Das Oberwerkzeug 22, 23 ist unabhängig vom Unterwerkzeug 24, 25 verstellbar, so dass eine entsprechende steuerungstechnische Synchronisation zwischen der Verstellung des Oberwerkzeugs 22, 23 und der Verstellung des Unterwerkzeugs 24, 25 erforderlich ist.

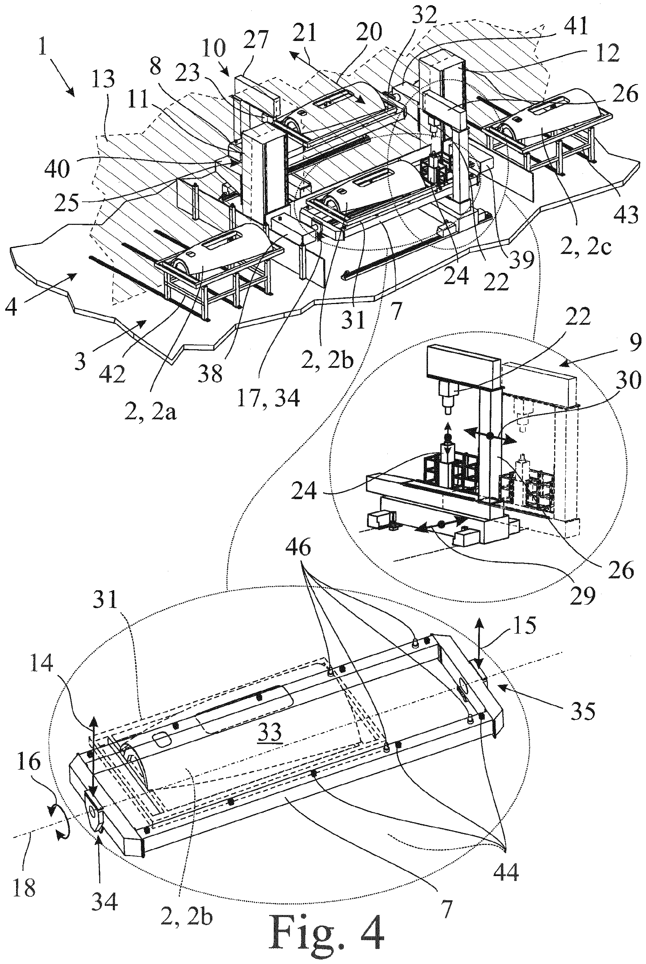

Eine bevorzugte alternative Ausgestaltung für die Bearbeitungseinheit 9, 10 zeigt Fig. 4. Hier ist das Gestell 26, 27 quer zu der Stations-Längsachse 5, 6 und parallel zu der Stations-Längsachse 5, 6 verstellbar. Diese beiden Verstellmöglichkeiten sind in Fig. 4 mit den Bezugszeichen 29, 30 angedeutet. Ferner ist hier und vorzugsweise das Gestell 26, 27 C-förmig ausgestaltet, so dass sich die Bearbeitungseinheit 9, 10 auf einfache Weise aus dem Bewegungsbereich des Flugzeugstrukturbauteils 2 herausbewegen lässt. Dabei sind das Oberwerkzeug 22, 23 und das Unterwerkzeug 24, 25 quer zu der Stations-Längsachse 5, 6 jeweils fest an dem Gestell 26, 27 angeordnet. Abgesehen von der Ausgestaltung der Bearbeitungseinheit 9, 10 entspricht der Aufbau der in Fig. 4 dargestellten Bearbeitungsanlage 1 dem Aufbau der in Fig. 1 dargestellten Bearbeitungsanlage 1. Insoweit darf zur Erläuterung der in Fig. 4 dargestellten Bearbeitungsanlage 1 auf die Ausführungen zu der in Fig. 1 dargestellten Bearbeitungsanlage 1 verwiesen werden.

Wie oben angedeutet, lässt sich das in Fig. 4 dargestellte Gestell 26, 27 derart quer zu der Stations-Längsachse 5, 6 verstellen, dass das Beladen bzw. Entladen des Aufspannrahmens 7, 8 mit bzw. von einem Flugzeugstrukturbauteil 2 parallel zu der Stations-Längsachse 5, 6 und seitlich an zumindest einem Positionierturm 11, 12 vorbei frei von dem Gestell 26, 27 ist. Eine derart verstellte Position des Gestells 26, 27 ist in Fig. 4 in gestrichelter Linie dargestellt. Hier zeigt sich in besonderem Maße der Vorteil eines C-förmigen Gestells 26, 27, dessen einseitig offene Ausgestaltung erst die oben angesprochene Betriebsweise erlaubt.

Hier und vorzugsweise ist es so, dass die Stations-Längsachse 5, 6 parallel zu der Turmebene 13 ausgestaltet ist. Ferner ist es hier und vorzugsweise so, dass der Aufspannrahmen 7, 8 zumindest in der in Fig. 1 dargestellten Grundstellung mit seiner Rahmen-Längsachse 18, 19 parallel zu der Stations-Längsachse 5, 6 ausgerichtet ist. Andere Möglichkeiten der Ausrichtung sind in Abhängigkeit von dem jeweiligen Anwendungsfall denkbar.

Grundsätzlich kann das Flugzeugstrukturbauteil 2 unmittelbar am Aufspannrahmen 7, 8 fixiert, insbesondere aufgespannt sein. Im Sinne einer einfachen Definition von Werkzeugbezugspunkten ist es jedoch bevorzugt, dass ein Bauteilträger 31, 32 für das Flugzeugstrukturbauteil 2 vorgesehen ist, der auf dem Aufspannrahmen 7, 8 lösbar fixierbar ist. Ein solcher Bauteilträger 31, 32 stellt ferner die für den Transport des Flugzeugstrukturbauteils 2 erforderliche mechanische Stabilität bereit.

Die untere Detaildarstellung in Fig. 1 zeigt, dass der Aufspannrahmen 7, 8 einen Tragbereich 33 definiert, den das aufgespannte Flugzeugstrukturbauteil 2 überstreicht, wobei der Tragbereich 33 seitlich der Positioniertürme 11, 12 angeordnet ist. Durch die seitliche Anordnung des Tragbereichs 33 ist das vorschlagsgemäße, kollisionsfreie Beladen und Entladen des Aufspannrahmens 7, 8 mit bzw. von einem Flugzeugstrukturbauteil 2 gewährleistet.

Für seine Anlenkung sind dem Aufspannrahmen 7, 8 zwei entlang der Stations-Längsachse 5, 6 zueinander versetzt angeordnete Anlenklager 34, 35; 36, 37 zugeordnet, die jeweils quer versetzt zu der Turmebene 13 angeordnet sind. Angesichts der Tatsache, dass die Höhenverstellbarkeit des Aufspannrahmens 7, 8 an den Positioniertürmen 11, 12 separat erfolgen kann, ist es sachgerecht, die Anlenklager 34, 35; 36, 37 als kardanische Lager auszugestalten. Andere Möglichkeiten für die Ausgestaltung der Anlenklager 34, 35; 36, 37 sind denkbar.

Eine besonders einfache Realisierung des vorschlagsgemäßen Querversatzes des Aufspannrahmens 7, 8 quer zu der Turmebene 13 zeigt Fig. 1. Hier ist der Aufspannrahmen 7, 8 über hier und vorzugsweise quer zu der Turmebene 13 verlaufende Tragarme 38, 39; 40, 41 mit den Positioniertürmen 11, 12 gekoppelt. Die Tragarme 38, 39; 40, 41 sind bei dem dargestellten und insoweit bevorzugten Ausführungsbeispiel kastenförmig ausgestaltet. Denkbar ist aber auch, die Tragarme 38, 39; 40, 41 als einfache Stahlprofile auszugestalten.

Im Sinne einer automatisierten Fertigung ist der Aufspannrahmen 7, 8 über die Tragarme 38, 39; 40, 41 motorisch höhenverstellbar gegenüber den Positioniertürmen 11, 12. Alternativ oder zusätzlich ist es so, dass der Aufspannrahmen 7, 8 über die Anlenklager 34, 35; 36, 37 motorisch schwenkbar gegenüber den Positioniertürmen 11, 12 ist. Für die Höhenverstellbarkeit ist den beiden Positioniertürmen 11, 12 vorzugsweise jeweils ein Antrieb zugeordnet. Für die Schwenkbarkeit des Aufspannrahmens 7, 8 um die Rahmen-Längsachse 18, 19 ist dem Aufspannrahmen 7, 8 vorzugsweise nur ein einziger, endseitig des Aufspannrahmens angeordneter Antrieb zugeordnet.

Fig. 1 zeigt weiter, dass für das Beladen und/oder das Entladen mindestens eine Übergabestation 42, 43 vorgesehen ist, die bezogen auf die Stations-Längsachse 5, 6 an einem Endabschnitt der Bearbeitungsanlage 1 angeordnet ist. Hier und vorzugsweise sind insgesamt zwei Übergabestationen 42, 43 vorgesehen, die entsprechend an gegenüberliegenden Endabschnitten der Bearbeitungsanlage 1 angeordnet sind.

Interessant bei den in den Fig. 1 und 4 dargestellten Ausführungsbeispielen ist die Tatsache, dass eine Übergabestation 42 im Hinblick auf die Materialflussrichtung vorgelagert zu der Bearbeitungseinheit 9, 10 angeordnet ist, während die Übergabestation 43 bezogen auf die Materialflussrichtung nachgelagert zu der Bearbeitungseinheit 9, 10 angeordnet ist. Die Bearbeitungseinheit 42 kann insbesondere als Rüstplatz für die Bearbeitungseinheit 9, 10 genutzt werden.

Grundsätzlich können die Übergabestationen 42, 43 als einfache Tische ausgestaltet sein, auf denen das Flugzeugstrukturbauteil 2 zusammen mit dem Bauteilträger 31, 32 abgelegt werden kann. Der Transport von der Übergabestation 42 zum Aufspannrahmen 7, 8 kann dann durch Transportgeräte wie einem Kran o. dgl. vorgenommen werden. Besonders einfach gestaltet sich der Transport allerdings, wie dargestellt, dass die Übergabestation 42, 43 und der Aufspannrahmen 7, 8 eine Längslageranordnung 44, 45 zur längsverschieblichen Lagerung des Flugzeugstrukturbauteils 2 und ggf. des damit verbundenen Bauteilträgers 31, 32 aufweist bzw. aufweisen, so dass das Flugzeugstrukturbauteil 2 zwischen der Übergabestation 42, 43 und dem Aufspannrahmen 7, 8 verschiebbar ist. Bei der dargestellten und insoweit bevorzugten Ausgestaltung weisen die Längslageranordnungen 44, 45 jeweils eine Rollenanordnung auf. Je nach zu transportierendem Flugzeugstrukturbauteil 2 ist es dann möglich, dass der Transport des Flugzeugstrukturbauteils 2 von der Übergabestation 42 auf den Aufspannrahmen 7, 8 manuell erfolgt. Denkbar ist aber auch, dass die Rollenanordnungen motorisch angetrieben sind, so dass der Transport ebenfalls automatisiert erfolgt. In beiden Fällen ist es vorzugsweise vorgesehen, dass eine Endanschlaganordnung 46, 47 die Längsverschieblichkeit des Flugzeugstrukturbauteils 2 begrenzt. Die Endanschlaganordnung 46, 47 ist weiter vorzugsweise durch entsprechende Aktoren steuerbar, so dass nach der Bearbeitung der Weitertransport des Flugzeugstrukturbauteils 2 möglich ist.

Vorzugsweise ist die Höhe der Übergabestationen 42, 43 weitgehend identisch zu der Höhe des Aufspannrahmens 7, 8, sofern sich der Aufspannrahmen 7, 8 in einer vorbestimmten Übergabeposition befindet. Damit kann das Beladen des Aufspannrahmens 7, 8 mit dem Flugzeugstrukturbauteil 2 erfolgen, ohne dass ein aufwendiger Höhenversatz des Flugzeugstrukturbauteils 2 erforderlich ist. Für eine gute Längsführung ist hier und vorzugsweise zwischen der Übergabestation 42 und dem Aufspannrahmen 7, 8 eine weitere, stützende Rollenanordnung vorgesehen.

Fig. 2a zeigt die Situation während des Beladens des Aufspannrahmens 7 mit dem Flugzeugstrukturbauteil 2. Das Flugzeugstrukturbauteil 2 befindet sich hier auf halbem Wege zum Aufspannrahmen 7. Die Bearbeitungseinheit 9 befindet sich in Fig. 2 auf der rechten Seite, um das Beladen nicht zu behindern.

Fig. 2b zeigt den Aufspannrahmen 7 im beladenen Zustand. Aus diesem Zustand heraus wird das Flugzeugstrukturbauteil 2 durch die Bearbeitungseinheit 9 bearbeitet, hier genietet.

Fig. 2c zeigt schließlich den Entladevorgang, bei dem das Flugzeugstrukturbauteil 2 von dem Aufspannrahmen 7 auf die Übergabestation 43 transportiert wird. Die Bearbeitungseinheit 9 befindet sich hier in der in Fig. 4 linken Position, in der sie das Entladen nicht behindert.

Es ergibt sich am besten aus einer Zusammenschau der Fig. 1 und 2, dass die Bearbeitungsanlage 1 hier nicht nur eine einzige Bearbeitungsstation 3, sondern zwei Bearbeitungsstationen 3, 4 mit jeweils einem Aufspannrahmen 7, 8 aufweist, wobei die Aufspannrahmen 7, 8 hier und vorzugsweise jeweils an den beiden Positioniertürmen 11, 12 angelenkt sind. Die Positioniertürme 11, 12 werden also jeweils doppelt genutzt, nämlich einerseits für die Anlenkung des Aufspannrahmens 7 und andererseits für die Anlenkung des Aufspannrahmens 8. Dies führt zu einer insgesamt kompakten und kosteneffektiven Anordnung.

Bei dem dargestellten und insoweit bevorzugten Ausführungsbeispiel ist es so, dass die beiden Aufspannrahmen 7, 8 bezogen auf die Turmebene 13 auf zwei gegenüberliegenden Seiten angeordnet sind. Dadurch lässt sich erreichen, dass die Positioniertürme 11, 12 auf beiden Seiten der Turmebene 13 zumindest aufgrund der Gewichtskraft ähnlich belastet werden, was die Stabilität der Anordnung insgesamt ergibt.

Eine mechanisch ganz besonders stabile Anordnung ergibt sich dadurch, dass die beiden Bearbeitungsstationen 3, 4 bezogen auf die Turmebene 13 symmetrisch zueinander aufgebaut sind. Alternativ oder zusätzlich ist es so, dass die Rahmen-Längsachsen 18, 19 der beiden Aufspannrahmen 7, 8 zumindest in der dargestellten Grundstellung parallel zueinander ausgerichtet sind. Dies führt zu einer weiteren Steigerung der Symmetrie der Anordnung, was wiederum mit einer Steigerung der mechanischen Stabilität einhergeht.

Interessant bei den dargestellten und insoweit bevorzugten Ausführungsbeispielen ist die Tatsache, dass die Übergabestation 42, 43 bzw. die Übergabestationen 42, 43 quer zu der Stations-Längsachse 5, 6 verstellbar und damit auf die Rahmen-Längsachsen 18, 19 der beiden Aufspannrahmen 7, 8 ausrichtbar ist bzw. sind. Diese Verstellbarkeit der Übergabestation 42, 43 bzw. der Übergabestationen 42, 43 kann manuell oder vorzugsweise motorisch vorgesehen sein. Für diese Quer-Verstellbarkeit ist den Übergabestationen 42, 43 jeweils eine Querlageranordnung 49, 50 zugeordnet, die im dargestellten Ausführungsbeispiel insgesamt drei Linearlager aufweist, die in der Zeichnung jeweils als durchgezogene Linie angedeutet sind.

Nach einer weiteren Lehre, der eigenständige Bedeutung zukommt, wird ein Verfahren für den Betrieb einer vorschlagsgemäßen Bearbeitungsanlage 1 als solches beansprucht.

Wesentlich nach der weiteren Lehre ist, dass das Beladen und/oder das Entladen des Aufspannrahmens 7, 8 durch einen Transport, hier und vorzugsweise ein Verschieben, des Flugzeugstrukturbauteils zwischen mindestens einer Übergabestation 42, 43 und mindestens einer Bearbeitungsstation 3, 4 entlang der Turmebene 13 erfolgt. Dies wurde weiter oben bereits erläutert.

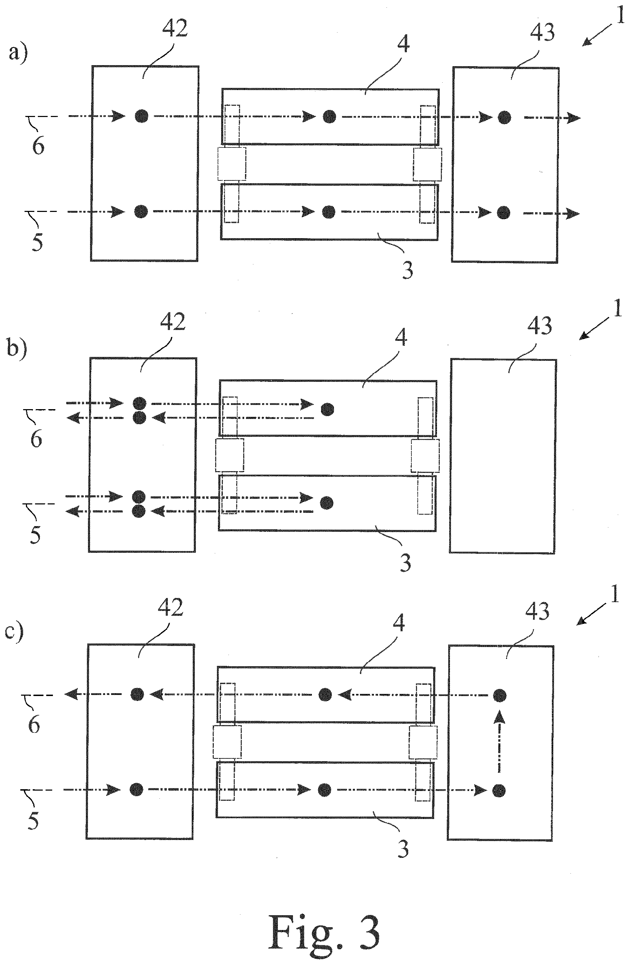

Fig. 3 zeigt verschiedene bevorzugte Ausführungsformen des vorschlagsgemäßen Verfahrens. Bei der Darstellung gemäß Fig. 3a ist es so, dass das Flugzeugstrukturbauteil 2 zunächst von einer Übergabestation 42, 43 auf den Aufspannrahmen 7, 8 der Bearbeitungsstation 3, 4 transportiert wird. Anschließend wird das Flugzeugstrukturbauteil 2 mittels der dortigen Bearbeitungseinheit 9, 10 bearbeitet. Schließlich wird das Flugzeugstrukturbauteil 2 auf eine weitere Übergabestation 43 transportiert. Dies ist der klassische Fall einer Linienfertigung.

Alternativ kann es aber auch vorgesehen sein, dass das Flugzeugstrukturbauteil 2 nach der Bearbeitung zurück auf dieselbe Übergabestation 42 transportiert wird. Dies ist beispielhaft in Fig. 3b gezeigt.

Fig. 3c zeigt eine weitere bevorzugte Ausführungsform für das vorschlagsgemäße Verfahren, bei der das Flugzeugstrukturbauteil 2 nacheinander auf einer ersten Bearbeitungsstation 3 und anschließend auf einer zweiten Bearbeitungsstation 4 bearbeitet wird. Zwischen den beiden Bearbeitungsschritten wird das Flugzeugstrukturbauteil 2 auf der Übergabestation 43 abgelegt und anschließend der Bearbeitungseinheit 10 der Bearbeitungsstation 4 zugeführt.

In einer für die Linienfertigung besonders bevorzugten Ausführungsform ist es vorgesehen, dass die Übergabestation 42, die Bearbeitungseinheit 9, 10 und die weitere Übergabestation 43 entlang der Stations-Längsachse 5, 6 hintereinander angeordnet sind.

Im Ergebnis bietet die vorschlagsgemäße Bearbeitungsanlage 1 insbesondere für die Linienfertigung zahlreiche Perspektiven. Allerdings zeigt insbesondere die Darstellung gemäß Fig. 3b, dass die vorschlagsgemäße Bearbeitungsanlage 1 auch vorteilhaft als Stand-Alone-Bearbeitungsanlage einsetzbar ist.

## Patentansprüche

1. Bearbeitungsanlage für Flugzeugstrukturbauteile (2) mit mindestens einer Bearbeitungsstation (3, 4), wobei die Bearbeitungsstation (3, 4) einen sich entlang einer Stations-Längsachse (5, 6) erstreckenden Aufspannrahmen (7, 8) zur Aufnahme des jeweils zu bearbeitenden Flugzeugstrukturbauteils (2) und eine Bearbeitungseinheit (9, 10), vorzugsweise eine Nieteinheit, für die Bearbeitung des Flugzeugstrukturbauteils (2) aufweist und wobei der Aufspannrahmen (7, 8) an zwei Positioniertürmen (11, 12), die in einer vertikalen Turmebene (13) angeordnet sind, höhenverstellbar und schwenkbar angelenkt ist,
**dadurch gekennzeichnet,**
**dass** ein Querversatz des Aufspannrahmens (7, 8) quer zu der Turmebene (13) vorgesehen ist, der erlaubt, dass ein Beladen und/oder ein Entladen des Aufspannrahmens (7, 8) mit bzw. von einem Flugzeugstrukturbauteil (2) entlang der Turmebene (13) erfolgt und seitlich an zumindest einem Positionierturm (11, 12) vorbeiführt.

2. Bearbeitungsanlage nach Anspruch 1, **dadurch gekennzeichnet, dass** die Bearbeitungseinheit (9, 10) ein Oberwerkzeug (22, 23) und ein Unterwerkzeug (24, 25) aufweist und dass das Oberwerkzeug (22, 23) und das Unterwerkzeug (24, 25) an einem, vorzugsweise portalförmigen, Gestell (26, 27) angeordnet sind, das parallel zu der Stations-Längsachse (5, 6) motorisch verstellbar ist, vorzugsweise, dass Oberwerkzeug (22, 23) und Unterwerkzeug (24, 25) quer zur Stations-Längsachse (5, 6) jeweils, insbesondere unabhängig voneinander, verstellbar an dem Gestell (26, 27) angeordnet sind.

3. Bearbeitungsanlage nach Anspruch 1 oder 2, **dadurch gekennzeichnet, dass** die Bearbeitungseinheit ein Oberwerkzeug (22, 23) und ein Unterwerkzeug (24, 25) aufweist und dass das Oberwerkzeug (22, 23) und das Unterwerkzeug (24, 25) an einem, vorzugsweise C-förmigen, Gestell (26, 27) angeordnet sind, das quer zu der Stations-Längsachse (5, 6) und parallel zu der Stations-Längsachse (5, 6) verstellbar ist, vorzugsweise, dass Oberwerkzeug (22, 23) und Unterwerkzeug (24, 25) quer zur Stations-Längsachse (5, 6) jeweils fest an dem Gestell (26, 27) angeordnet sind.

4. Bearbeitungsanlage nach Anspruch 3, **dadurch gekennzeichnet, dass** das Gestell (26, 27) derart quer zu der Stations-Längsachse (5, 6) verstellbar ist, dass das Beladen und/oder Entladen des Aufspannrahmens (7, 8) mit bzw. von einem Flugzeugstrukturbauteil (2) parallel zu der Stations-Längsachse (5, 6) und seitlich an zumindest einem Positionierturm (11, 12) vorbei frei von dem Gestell (26, 27) ist.

5. Bearbeitungsanlage nach einem der vorhergehenden Ansprüche, **dadurch gekennzeichnet, dass** der Aufspannrahmen (7, 8) zumindest in einer Grundstellung des Aufspannrahmens (7, 8) mit seiner Rahmen-Längsachse (18, 19) parallel zu der Stations-Längsachse (5, 6) ausgerichtet ist.

6. Bearbeitungsanlage nach einem der vorhergehenden Ansprüche, **dadurch gekennzeichnet, dass** ein Bauteilträger (31, 32) für das Flugzeugstrukturbauteil (2) vorgesehen ist, der auf dem Aufspannrahmen (7, 8) lösbar fixierbar ist.

7. Bearbeitungsanlage nach einem der vorhergehenden Ansprüche, **dadurch gekennzeichnet, dass** der Aufspannrahmen (7, 8) einen Tragbereich (33) definiert, den das aufgespannte Flugzeugstrukturbauteil (2) überstreicht und dass der Tragbereich (33) seitlich der Positioniertürme (11, 12) angeordnet ist.

8. Bearbeitungsanlage nach einem der vorhergehenden Ansprüche, **dadurch gekennzeichnet, dass** dem Aufspannrahmen (7, 8) für seine Anlenkung zwei entlang der Stations-Längsachse (5, 6) zueinander versetzt angeordnete Anlenklager (34, 35; 36, 37) zugeordnet sind und dass die Anlenklager (34, 35; 36, 37) jeweils quer versetzt zu der Stations-Längsachse (5, 6) angeordnet sind.

9. Bearbeitungsanlage nach einem der vorhergehenden Ansprüche, **dadurch gekennzeichnet, dass** der Aufspannrahmen (7, 8) über vorzugsweise quer zu der Turmebene (13) verlaufende Tragarme (38, 39; 40, 41) mit den Positioniertürmen (11, 12) gekoppelt ist.

10. Bearbeitungsanlage nach Anspruch 9, **dadurch gekennzeichnet, dass** der Aufspannrahmen (7, 8) über die Tragarme (38, 39; 40, 41) motorisch höhenverstellbar gegenüber den Positioniertürmen (11, 12) ist, und/oder, dass der Aufspannrahmen (7, 8) über die Anlenklager (34, 35; 36, 37) motorisch schwenkbar gegenüber den Positioniertürmen (11, 12) ist.

11. Bearbeitungsanlage nach einem der vorhergehenden Ansprüche, **dadurch gekennzeichnet, dass** für das Beladen und/oder Entladen mindestens eine Übergabestation (42, 43) vorgesehen ist, die bezogen auf die Stations-Längsachse (5, 6) an einem Endabschnitt der Bearbeitungsanlage (1) angeordnet ist, vorzugsweise, dass zwei Übergabestationen (42, 43) vorgesehen sind, die bezogen auf die Stations-Längsachse (5, 6) an zwei Endabschnitten der Bearbeitungsanlage (1) angeordnet sind.

12. Bearbeitungsanlage nach Anspruch 11, **dadurch gekennzeichnet, dass** die Übergabestation (42, 43) und/oder der Aufspannrahmen (7, 8) eine Längslageranordnung (44, 45) zur längsverschieblichen Lagerung des Flugzeugstrukturbauteils 2) aufweist bzw. aufweisen, so dass das Flugzeugstrukturbauteil (2) zwischen der Übergabestation (42, 43) und dem Aufspannrahmen (7, 8) verschieblich ist, vorzugsweise, dass die Längslageranordnung (44, 45) eine Rollenanordnung aufweist.

13. Bearbeitungsanlage nach einem der vorhergehenden Ansprüche, **dadurch gekennzeichnet, dass** zwei Bearbeitungsstationen (3, 4) mit jeweils einem Aufspannrahmen (7, 8) vorgesehen sind und dass die Aufspannrahmen (7, 8) jeweils an den beiden Positioniertürmen (11, 12) angelenkt sind.

14. Bearbeitungsanlage nach Anspruch 13, **dadurch gekennzeichnet, dass** die beiden Aufspannrahmen (7, 8) bezogen auf die Turmebene (13) auf zwei gegenüberliegenden Seiten angeordnet sind.

15. Bearbeitungsanlage nach Anspruch 13 oder 14, **dadurch gekennzeichnet, dass** die beiden Bearbeitungsstationen (3, 4) bezogen auf die Turmebene (13) symmetrisch zueinander aufgebaut sind, und/oder, dass die Rahmen-Längsachsen (5, 6) der beiden Aufspannrahmen (7, 8) zumindest in einer Grundstellung der Aufspannrahmen (7, 8) parallel zueinander ausgerichtet sind.

16. Bearbeitungsanlage nach einem der vorhergehenden Ansprüche, **dadurch gekennzeichnet, dass** die Übergabestation (42, 43) bzw. die Übergabestationen (42, 43) quer zu der Stations-Längsachse (5, 6) verstellbar und damit motorisch auf die Rahmen-Längsachsen (18, 19) der beiden Aufspannrahmen (7, 8) ausrichtbar ist bzw. sind.

17. Verfahren für den Betrieb einer Bearbeitungsanlage (1) nach einem der vorhergehenden Ansprüche, **dadurch gekennzeichnet, dass** das Beladen und/oder das Entladen durch einen Transport, insbesondere ein Verschieben, des Flugzeugstrukturbauteils (2) zwischen mindestens einer Übergabestation (42, 43) und mindestens einer Bearbeitungsstation (3, 4) entlang der Turmebene (13) erfolgt.

18. Verfahren nach Anspruch 17, **dadurch gekennzeichnet, dass** das Flugzeugstrukturbauteil (2) zunächst von einer Übergabestation (42, 43) auf den Aufspannrahmen (7, 8) der Bearbeitungsstation (3, 4) transportiert wird, anschließend mittels der dortigen Bearbeitungseinheit (9, 10) bearbeitet wird und schließlich auf die oder eine weitere Übergabestation (42, 43) transportiert wird, vorzugsweise, dass die Übergabestation (42, 43), die Bearbeitungseinheit (9, 10) und die weitere Übergabestation (42, 43) entlang der Stations-Längsachse (5, 6) hintereinander angeordnet sind.

19. Verfahren nach Anspruch 17 oder 18, **dadurch gekennzeichnet, dass** das Flugzeugstrukturbauteil (2) nacheinander auf einer ersten Bearbeitungsstation (3) und anschließend auf einer zweiten Bearbeitungsstation (4) bearbeitet wird.

## Claims

1. Processing installation for aircraft structural components (2) having at least one processing station (3, 4), wherein the processing station (3, 4) has a clamping frame (7, 8) which extends along a longitudinal station axis (5, 6) for receiving the aircraft structural component (2) which is intended to be processed in each case and a processing unit (9, 10), preferably a riveting unit, for processing the aircraft structural component (2) and wherein the clamping frame (7, 8) is articulated so as to be adjustable in terms of height and pivotable to two positioning towers (11, 12) which are arranged in a vertical tower plane (13),
**characterised in that,**
there is provided transversely relative to the tower plane (13) a transverse offset of the clamping frame (7, 8) which enables an aircraft structural component (2) to be loaded onto and/or unloaded from the clamping frame (7, 8) along the tower plane (13) and at least one positioning tower (11, 12) to be passed laterally.

2. Processing installation according to Claim 1, **characterised in that** the processing unit (9, 10) has an upper tool (22, 23) and a lower tool (24, 25) and **in that** the upper tool (22, 23) and the lower tool (24, 25) are arranged on a preferably portal-like frame (26, 27) which can be displaced in a motorised manner parallel with the longitudinal station axis (5, 6), preferably **in that** the upper tool (22, 23) and lower tool (24, 25) are arranged transversely relative to the longitudinal station axis (5, 6) in each case, in particular independently of each other, so as to be able to be displaced on the frame (26, 27).

3. Processing installation according to Claim 1 or 2, **characterised in that** the processing unit has an upper tool (22, 23) and a lower tool (24, 25) and **in that** the upper tool (22, 23) and the lower tool (24, 25) are arranged on a preferably C-shaped frame (26, 27) which can be displaced transversely relative to the longitudinal station axis (5, 6) and parallel with the longitudinal station axis (5, 6), preferably **in that** the upper tool (22, 23) and lower tool (24, 25) are securely arranged in each case on the frame (26, 27) transversely relative to the longitudinal station axis (5, 6).

4. Processing installation according to Claim 3, **characterised in that** the frame (26, 27) can be displaced transversely relative to the longitudinal station axis (5, 6) in such a manner that an aircraft structural component (2) can be loaded onto and/or unloaded from the clamping frame (7, 8) parallel with the longitudinal station axis (5, 6) and is free from the frame (26, 27) laterally past at least one positioning tower (11, 12).

5. Processing installation according to any one of the preceding claims, **characterised in that** the clamping frame (7, 8) at least in a basic position of the clamping frame (7, 8) is orientated with the longitudinal frame axis (18, 19) thereof parallel with the longitudinal station axis (5, 6).

6. Processing installation according to any one of the preceding claims, **characterised in that** there is provided for the aircraft structural component (2) a component carrier (31, 32) which is releasably fixed to the clamping frame (7, 8).

7. Processing installation according to any one of the preceding claims, **characterised in that** the clamping frame (7, 8) defines a carrier region (33) over which the clamped aircraft structural component (2) passes and **in that** the carrier region (33) is arranged at the side of the positioning towers (11, 12).

8. Processing installation according to any one of the preceding claims, **characterised in that** there are associated with the clamping frame (7, 8) for the articulation thereof two articulation bearings (34, 35; 36, 37) which are arranged offset relative to each other along the longitudinal station axis (5, 6) and **in that** the articulation bearings (34, 35; 36, 37) are in each case arranged offset transversely relative to the longitudinal station axis (5, 6).

9. Processing installation according to any one of the preceding claims, **characterised in that** the clamping frame (7, 8) is coupled to the positioning towers (11, 12) by means of carrier arms (38, 39; 40, 41) which preferably extend transversely relative to the tower plane (13).

10. Processing installation according to Claim 9, **characterised in that** the clamping frame (7, 8) can be adjusted in terms of height with respect to the positioning towers (11, 12) in a motorised manner by means of the carrier arms (38, 39; 40, 41), and/or **in that** the clamping frame (7, 8) can be pivoted in a motorised manner with respect to the positioning towers (11, 12) by means of the articulation bearings (34, 35; 36, 37).

11. Processing installation according to any one of the preceding claims, **characterised in that** for the loading and/or unloading there is provided at least one transfer station (42, 43) which is arranged with respect to the longitudinal station axis (5, 6) on an end portion of the processing installation (1), preferably **in that** there are provided two transfer stations (42, 43) which are arranged with respect to the longitudinal station axis (5, 6) on two end portions of the processing installation (1).

12. Processing installation according to Claim 11, **characterised in that** the transfer station (42, 43) and/or the clamping frame (7, 8) has/have a longitudinal bearing arrangement (44, 45) for longitudinally displaceable support of the aircraft structural component (2) so that the aircraft structural component (2) can be displaced between the transfer station (42, 43) and the clamping frame (7, 8), preferably **in that** the longitudinal bearing arrangement (44, 45) has a roller arrangement.

13. Processing installation according to any one of the preceding claims, **characterised in that** two processing stations (3, 4) each having a clamping frame (7, 8) are provided and **in that** the clamping frames (7, 8) are each articulated to the two positioning towers (11, 12).

14. Processing installation according to Claim 13, **characterised in that** the two clamping frames (7, 8) are arranged at two opposing sides with respect to the tower plane (13).

15. Processing installation according to Claim 13 or 14, **characterised in that** the two processing stations (3, 4) with respect to the tower plane (13) are constructed symmetrically with respect to each other, and/or **in that** the longitudinal frame axes (5, 6) of the two clamping frames (7, 8) at least in a basic position of the clamping frames (7, 8) are orientated parallel with each other.

16. Processing installation according to any one of the preceding claims, **characterised in that** the transfer station (42, 43) or the transfer stations (42, 43) can be displaced transversely relative to the longitudinal station axis (5, 6) and can consequently be orientated in a motorised manner on the longitudinal frame axes (18, 19) of the two clamping frames (7, 8).

17. Method for operating a processing installation (1) according to any one of the preceding claims, **characterised in that** the loading and/or the unloading is carried out by means of a transport, in particular a displacement, of the aircraft structural component (2) between at least one transfer station (42, 43) and at least one processing station (3, 4) along the tower plane (13).

18. Method according to Claim 17, **characterised in that** the aircraft structural component (2) is first transported from a transfer station (42, 43) to the clamping frame (7, 8) of the processing station (3, 4), is subsequently processed by means of the processing unit (9, 10) at that location and is finally transported to the or an additional transfer station (42, 43), preferably **in that** the transfer station (42, 43), the processing unit (9, 10) and the additional transfer station (42, 43) are arranged one behind the other along the longitudinal station axis (5, 6).

19. Method according to Claim 17 or 18, **characterised in that** the aircraft structural component (2) is processed successively on a first processing station (3) and subsequently on a second processing station (4) .

## Revendications

1. Installation de traitement pour composants de structures d'avions (2) comprenant au moins un poste de traitement (3, 4), le poste de traitement (3, 4) présentant un cadre de fixation (7, 8) s'étendant le long d'un axe longitudinal du poste (5, 6), pour recevoir le composant de structure d'avion (2) respectif à traiter et une unité d'usinage (9, 10), de préférence une unité de rivetage, pour le traitement du composant de structure d'avion (2) et le cadre de fixation (7, 8) étant articulé de manière réglable en hauteur et de manière pivotante à deux tours de positionnement (11, 12) qui sont disposées dans un plan des tour vertical (13),
**caractérisée en ce**
**qu'**un décalage transversal du cadre de fixation (7, 8) transversalement au plan des tours (13) est prévu, lequel permet d'effectuer un chargement du cadre de fixation (7, 8) avec un composant de structure d'avion (2) et/ou un déchargement d'un tel composant de celui-ci le long du plan des tours (13), et de passer latéralement devant au moins l'une des tours de positionnement (11, 12).

2. Installation de traitement selon la revendication 1, **caractérisée en ce que** l'unité de traitement (9, 10) présente un outil supérieur (22, 23) et un outil inférieur (24, 25) et **en ce que** l'outil supérieur (22, 23) et l'outil inférieur (24, 25) sont disposés sur un bâti (26, 27) de préférence en forme de portique, qui peut être déplacé de manière motorisée parallèlement à l'axe longitudinal (5, 6) du poste, de préférence **en ce que** l'outil supérieur (22, 23) et l'outil inférieur (24, 25) sont disposés transversalement à l'axe longitudinal (5, 6) du poste à chaque fois de manière déplaçable sur le bâti (26, 27), notamment indépendamment l'un de l'autre.

3. Installation de traitement selon la revendication 1 ou 2, **caractérisée en ce que** l'unité de traitement présente un outil supérieur (22, 23) et un outil inférieur (24, 25) et **en ce que** l'outil supérieur (22, 23) et l'outil inférieur (24, 25) sont disposés sur un bâti (26, 27) de préférence en forme de C, qui peut être déplacé transversalement à l'axe longitudinal (5, 6) du poste et parallèlement à l'axe longitudinal (5, 6) du poste, de préférence **en ce que** l'outil supérieur (22, 23) et l'outil inférieur (24, 25) sont disposés transversalement à l'axe longitudinal (5, 6) du poste à chaque fois fixement sur le bâti (26, 27).

4. Installation de traitement selon la revendication 3, **caractérisée en ce que** le bâti (26, 27) peut être déplacé transversalement à l'axe longitudinal (5, 6) du poste de telle sorte que le chargement du cadre de fixation (7, 8) avec un composant de structure d'avion (2) et/ou le déchargement d'un tel composant de celui-ci parallèlement à l'axe longitudinal (5, 6) du poste et latéralement devant au moins une tour de positionnement (11, 12) s'effectue de manière dégagée du bâti (26, 27).

5. Installation de traitement selon l'une quelconque des revendications précédentes, **caractérisée en ce que** le cadre de fixation (7, 8) est orienté au moins dans une position de base du cadre de fixation (7, 8) avec son axe longitudinal de cadre (18, 19) parallèlement à l'axe longitudinal (5, 6) du poste.

6. Installation de traitement selon l'une quelconque des revendications précédentes, **caractérisée en ce qu'**un support de composant (31, 32) pour le composant de structure d'avion (2) est prévu, lequel peut être fixé de manière amovible sur le cadre de fixation (7, 8).

7. installation de traitement selon l'une quelconque des revendications précédentes, **caractérisée en ce que** le cadre de fixation (7, 8) définit une région de support (33) qui couvre le composant de structure d'avion fixé (2) et **en ce que** la région de support (33) est disposée latéralement aux tours de positionnement (11, 12).

8. Installation de traitement selon l'une quelconque des revendications précédentes, **caractérisée en ce que** le cadre de fixation (7, 8), pour son articulation, est associé à deux paliers d'articulation (34, 35 ; 36, 37) disposés de manière décalée l'un par rapport à l'autre le long de l'axe longitudinal (5, 6) du poste, et **en ce que** les paliers d'articulation (34, 35 ; 36, 37) sont disposés à chaque fois de manière décalée transversalement par rapport à l'axe longitudinal (5, 6) du poste.

9. Installation de traitement selon l'une quelconque des revendications précédentes, **caractérisée en ce que** le cadre de fixation (7, 8) est accouplé aux tours de positionnement (11, 12) par le biais de bras de support (38, 39 ; 40, 41) s'étendant de préférence transversalement au plan des tours (13) .

10. Installation de traitement selon la revendication 9, **caractérisée en ce que** le cadre de fixation (7, 8) peut être réglé en hauteur de manière motorisée par le biais des bras de support (38, 39 ; 40, 41) par rapport aux tours de positionnement (11, 12), et/ou **en ce que** le cadre de fixation (7, 8) peut pivoter de manière motorisée par le biais des paliers d'articulation (34, 35 ; 36, 37) par rapport aux tours de positionnement (11, 12).

11. Installation de traitement selon l'une quelconque des revendications précédentes, **caractérisée en ce que** pour le chargement et/ou le déchargement, il est prévu au moins un poste de transfert (42, 43) qui est disposé par rapport à l'axe longitudinal (5, 6) du poste au niveau d'une portion d'extrémité de l'installation de traitement (1), de préférence **en ce que** deux postes de transfert (42, 43) sont prévus, lesquels sont disposés par rapport à l'axe longitudinal (5, 6) du poste au niveau de deux portions d'extrémité de l'installation de traitement (1).

12. Installation de traitement selon la revendication 11, **caractérisée en ce que** le poste de transfert (42, 43) et/ou le cadre de fixation (7, 8) présente(nt) un agencement de palier longitudinal (44, 45) pour le support sur palier déplaçable longitudinalement du composant de structure d'avion (2), de telle sorte que le composant de structure d'avion (2) puisse être déplacé entre le poste de transfert (42, 43) et le cadre de fixation (7, 8), de préférence **en ce que** l'agencement de palier longitudinal (44, 45) présente un agencement à rouleaux.

13. Installation de traitement selon l'une quelconque des revendications précédentes, **caractérisée en ce que** deux postes de traitement (3, 4) sont prévus avec un cadre de fixation (7, 8) respectif, et **en ce que** les cadres de fixation (7, 8) sont chacun articulés aux deux tours de positionnement (11, 12).

14. Installation de traitement selon la revendication 13, **caractérisée en ce que** les deux cadres de fixation (7, 8) sont disposés sur deux côtés opposés par rapport au plan des tours (13).

15. Installation de traitement selon la revendication 13 ou 14, **caractérisée en ce que** les deux postes de traitement (3, 4) sont construits de manière symétrique l'un par rapport à l'autre par rapport au plan des tours (13), et/ou **en ce que** les axes longitudinaux de cadre (5, 6) des deux cadres de fixation (7, 8) sont orientés parallèlement l'un à l'autre au moins dans une position de base des cadres de fixation (7, 8).

16. Installation de traitement selon l'une quelconque des revendications précédentes, **caractérisée en ce que** le poste de transfert (42, 43) ou les postes de transfert (42, 43) peuvent être déplacés transversalement à l'axe longitudinal (5, 6) du poste et par conséquent peuvent être orientés de manière motorisée vers les axes longitudinaux de cadre (18, 19) des deux cadres de fixation (7, 8).

17. Procédé pour le fonctionnement d'une installation de traitement (1) selon l'une quelconque des revendications précédentes, **caractérisé en ce que** le chargement et/ou le déchargement s'effectuent par un transport, en particulier un coulissement du composant de structure d'avion (2) entre au moins un poste de transfert (42, 43) et au moins un poste de traitement (3, 4) le long du plan des tours (13).

18. Procédé selon la revendication 17, **caractérisé en ce que** le composant de structure d'avion (2) est d'abord transporté depuis un poste de transfert (42, 43) sur le cadre de fixation (7, 8) du poste de traitement (3, 4), puis est traité au moyen de l'unité de traitement (9, 10) s'y trouvant, et finalement est transporté sur le poste de transfert ou un poste de transfert supplémentaire (42, 43), de préférence **en ce que** le poste de transfert (42, 43), l'unité de traitement (9, 10) et le poste de transfert supplémentaire (42, 43) sont disposés les uns derrière les autres le long de l'axe longitudinal (5, 6) du poste.

19. Procédé selon la revendication 17 ou 18, **caractérisé en ce que** le composant de structure d'avion (2) est traité successivement sur un premier poste de traitement (3) puis sur un deuxième poste de traitement (4).
